# FASCICULE DE BREVET EUROPEEN

(11) **EP 2 248 061 B1**
(45) Date de publication et mention de la délivrance du brevet: **27.03.2019**
(21) Numéro de dépôt: 09715962.8
(22) Date de dépôt: 11.02.2009
(51) Int. Cl.: G06F 21/75, H04L 9/06, H04L 9/00, G01R 31/317

(54) **PROCÉDÉ DE TEST DE CIRCUITS DE CRYPTOGRAPHIE, CIRCUIT DE CRYPTOGRAPHIE SÉCURISÉ APTE À ÊTRE TESTÉ, ET PROCÉDÉ DE CÂBLAGE D'UN TEL CIRCUIT**
VERFAHREN ZUM TESTEN KRYPTOGRAFISCHER SCHALTUNGEN, GESICHERTE TESTFÄHIGE KRYPTOGRAFISCHE SCHALTUNG UND VERFAHREN ZUR VERDRAHTUNG EINER DERARTIGEN SCHALTUNG
METHOD FOR TESTING CRYPTOGRAPHIC CIRCUITS, SECURED CRYPTOGRAPHIC CIRCUIT CAPABLE OF BEING TESTED, AND METHOD FOR WIRING SUCH CIRCUIT

(30) Priorité: 25.02.2008 FR 0851184
(43) Date de publication de la demande: 10.11.2010
(73) Titulaire: Institut Mines Telecom, 75014 Paris (FR)
(72) Inventeur: GUILLEY, Sylvain, F-75013 Paris (FR); DANGER, Jean-Luc, F-62160 Antony (FR)
(74) Mandataire: Lucas, Laurent Jacques
(86) Numéro de dépôt international: PCT/EP2009/051600
(87) Numéro de publication internationale: WO 2009/106428

(56) Documents cités:
- US-A1- 2005 213 757
- US-B1- 6 560 737
- PENGYUAN YU: "Implementation of DPA-Resistant Circuit for FPGA" [Online] 24 avril 2007 (2007-04-24), , BLACKSBURG, VIRGINIA, USA , XP002500223 Extrait de l'Internet: URL:http://scholar.lib.vt.edu/theses/avail able/etd-04302007-134556/unrestricted/Thes is.pdf> [extrait le 2008-10-16] page 10 - page 14 alinéa [0004] page 33 - page 46
- KRIS TIRI ET AL: "Prototype IC with WDDL and Differential Routing - DPA Resistance Assessment" CRYPTOGRAPHIC HARDWARE AND EMBEDDED SYSTEMS - CHES 2005 LECTURE NOTES IN COMPUTER SCIENCE;;LNCS, SPRINGER, BERLIN, DE, vol. 3659, 1 janvier 2005 (2005-01-01), pages 354-365, XP019017443 ISBN: 978-3-540-28474-1

## Description

La présente invention concerne un procédé de test de circuits de cryptographie. Elle concerne également un circuit de cryptographie sécurisé apte à être testé.

Les circuits de cryptographie, comme la plupart des circuits électroniques doivent subir des tests avant leur exploitation. Les tests de circuits de cryptographie s'inscrivent donc dans la problématique générale du test de circuits électroniques, mais avec certaines particularités.
Les tests permettent de vérifier après fabrication que les circuits remplissent bien leurs fonctions prévues. Un circuit peut en effet comporter plusieurs défauts de fabrication, provenant notamment :
- d'une inhomogénéité des substances chimiques utilisées entraînant une dégradation des performances ;
- du dépôt d'une impureté telle qu'une poussière par exemple provoquant une destruction locale du circuit ;
- de l'oubli d'une étape de fabrication causant le dysfonctionnement du circuit ;
- d'une confusion dans l'usage des masques de fabrication.
Parmi ces défauts, les problèmes les plus imprévisibles proviennent du dépôt d'une poussière qui peut entraîner :
- un court-circuit, c'est-à-dire la connexion non voulue de deux équipotentielles ou « noeuds »;
- ou une coupure, c'est-à-dire la déconnexion d'un noeud, donnant lieu à deux équipotentielles.

Dans une phase de tests après fabrication, un circuit est alimenté en tension et certaines de ses entrées, bien spécifiques, reçoivent des signaux de test. En réponse à ces signaux de test, un dispositif de test peut effectuer des vérifications de fonctionnement. Pour que le circuit soit testable, il doit remplir deux conditions :
- le circuit doit être contrôlable, c'est-à-dire qu'il est possible d'amener le circuit dans un état connu ;
- il doit être observable, c'est-à-dire qu'il est possible de comparer une caractéristique du circuit dans son état connu avec une caractéristique de référence théorique, obtenue par exemple par simulation.
La mise en oeuvre de ces deux conditions permet au dispositif de test de former un jeu de vecteurs de test qui sont autant de vérifications différentes à réaliser sur le circuit.
Un premier paramètre clé d'un test est sa couverture. La couverture exprime la proportion de noeuds logiques effectivement vérifiée. Pour s'assurer qu'un circuit est fonctionnel, une couverture tendant vers 100% est souhaitée, mais très rarement atteinte en pratique.
Un second paramètre clé du test est son coût, qui dépend notamment de deux facteurs :
- le nombre de vecteurs de test, cette quantité devant être réduite au minimum car il conditionne la durée d'interaction avec le circuit, le coût étant proportionnel à cette durée, en particulier, il est important que la cadence du test soit supérieure au débit de fabrication des circuits, sinon le facteur limitant la production devient le test lui-même. C'est notamment une des raisons pour laquelle la couverture n'est jamais de 100% ;
- l'insertion du matériel de test, étant donné qu'il est rare que les circuits puissent être testés tels quels, selon ce qu'il est convenu d'appeler des tests fonctionnels, du matériel supplémentaire doit souvent être ajouté pour permettre la contrôlabilité ou l'observabilité des circuits à tester, ce matériel ayant un coût qui réduit l'attrait d'une solution matérielle par rapport à une solution logicielle.

Plusieurs techniques de test sont connues. Pour le test fonctionnel, aucun matériel n'est ajouté. On vérifie simplement que les sorties du circuit à tester sont bien conformes à une séquence bien déterminée des entrées de ce même circuit. Cette méthode de test a malheureusement une couverture faible tout en nécessitant un très grand nombre de vecteurs d'entrée. Elle est donc pratiquement inapplicable.
Dans le cas des tests par chaîne, le circuit est modifié de façon à pouvoir remplir deux rôles, d'une part sa fonctionnalité et d'autre part la réalisation d'un registre à décalage reliant tous les éléments séquentiels du circuit, typiquement des bascules D ou DFF. Le surcoût est donc lié au nombre de bascules du circuit, celles-ci nécessitant deux entrées, une première entrée dite « test in » et une deuxième entrée dite « test enable », ce qui fait croître la surface d'un circuit. De plus, un routage fonctionnel vient aussi s'ajouter au routage entre bascules, réduisant les possibilités de routage, propriété critique dans un circuit contraint par l'interconnexion. Enfin, il est à noter que le test par chaîne permet de tester les noeuds collés à une même valeur logique. Ce modèle d'erreur n'est pas rigoureusement égal aux vraies erreurs que sont les courts-circuits et les coupures.
Dans la méthode de test analogique dite IDDQ, le circuit à tester est placé dans un état puis à l'aide d'un ampèremètre le courant consommé par le circuit est étudié. Cette méthode permet notamment de détecter les courts-circuits en fonction de la valeur du courant consommé. Elle ne nécessite pas de matériel nécessaire pour l'observabilité. Cependant la méthode IDDQ est lente. Elle est également partielle car elle ne permet de détecter que les courts-circuits.
Dans la méthode dite BIST selon l'expression anglo-saxonne « Built-In Self Test », un module extérieur à la partie à tester est ajouté. Il a notamment pour rôle de prendre la main sur le circuit à tester et de réaliser son test de façon dynamique. Cette méthode s'applique à des blocs simples, à fonctionnalité triviale, comme une mémoire par exemple, où on lit précisément ce qui a été écrit. Elle ne convient pas à un circuit complexe du type cryptographie.

Outre leur complexité, les circuits de cryptographie présentent des contraintes antinomiques en ce qui concerne leur test. En effet, d'une part une seule erreur dans la fonctionnalité peut compromettre l'intégralité des secrets, d'où la nécessité d'un test exhaustif, mais d'autre part l'ajout de matériel de test permettant l'observabilité interne, anéantit la sécurité du circuit. En particulier un seul bit d'une variable intermédiaire d'un algorithme de cryptographie accessible à un attaquant peut permettre à celui-ci de remonter aux secrets par une analyse cryptographique. Ainsi, il est nécessaire de tester les circuits sécurisés, mais aucune méthode de test existante n'est satisfaisante. Le test fonctionnel ne permet pas une couverture suffisante alors qu'une couverture de 100% est primordiale pour un circuit de cryptographie. Le test par chaînage des bascules DFF ouvre une vulnérabilité car un attaquant peut arriver, de manière logique de surcroît, à lire l'état du processeur de chiffrement, plus précisément ses clés ou ses valeurs intermédiaires. Pour contrecarrer ce type d'attaque, une solution propose de rendre la structure de chaînage aléatoire. Néanmoins cette approche viole le principe de Kerckhoff qui impose la concentration de la sécurité dans les clés de taille réduite et non dans la complexité et la confidentialité de l'implémentation. Le test IDDQ est quant à lui trop coûteux et parcellaire, tandis que le test BIST n'est pas adapté à un calcul cryptographique.

Le document: PENGYUAN YU, "Implementation of DPA-Resistant Circuit for FPGA", 24 avril 2007 (2007-04-24), BLACKSBURG, VIRGINIA, USA extrait de rinternet:URL:http://scholar.lib.vt.edu/theses/available/etd-04302007-134556/ unrestricted/Thesis.pdf, décrit l'implémentation d'un circuit FPGA résistant aux attaques par analyse de consommation.

Un but de l'invention est notamment de permettre le test de circuits de cryptographie en surmontant les contraintes antinomiques évoquées précédemment, et plus généralement les inconvénients des méthodes antérieures. A cet effet, l'invention a pour objet un procédé de test d'un circuit de cryptographie comportant des registres et des portes logiques interconnectés par un ensemble de noeuds, ledit procédé effectuant une analyse différentielle de consommation (DPA) comportant :
- une phase d'acquisition de mesures de traces de consommation au niveau de tous les noeuds fonction de vecteurs de signaux de test en entrée du circuit ;
- une phase d'analyse du taux d'activité de chaque noeud à partir des mesures de traces de consommation, un noeud étant considéré en bon fonctionnement lorsque son taux d'activité est conforme à un modèle de prédiction de son activité.
Dans le cas où le circuit de cryptographie est non sécurisé, l'analyse différentielle par DPA est effectuée en guise de test, comme s'il s'agissait de faire une attaque pour trouver le secret cryptographique. Ainsi la conformité de l'activité de chaque noeud à un prédicteur d'activité permet d'établir son intégrité. Cependant la DPA reste longue car le prédicteur dépend du secret cryptographique, inconnu, et un grand nombre de traces de consommation sont requises (de l'ordre de quelques milliers). Si le circuit cryptographique dispose d'un mécanisme de personnalisation du secret, il est alors possible d'injecter un secret cryptographique « connu » de façon à ce que le test par DPA soit moins long car moins de traces de consommation sont nécessaires.

La personnalisation du secret se fera dans ce cas après le test pour assurer la protection cryptographique.

Dans le cas où le circuit de cryptographie est sécurisé par une logique différentielle structurée autour d'un premier demi-circuit associé à un deuxième demi-circuit en logique complémentaire, l'activité globale du circuit est équilibrée et l'analyse différentielle de la consommation ne peut pas fonctionner. Selon l'invention l'alimentation électrique Vdd1 du premier demi-circuit est dissociée de l'alimentation électrique Vdd2 du deuxième demi-circuit, l'analyse différentielle de consommation devenant possible en mesurant l'activité sur chaque demi-circuit. L'analyse est réalisée parallèlement sur chaque demi-circuits deux alimentations étant regroupées en une même alimentation électrique après le test.
Les composants du premier demi-circuit sont par exemple reliés via des lignes d'alimentation à une première source de tension Vdd1 et les composants du deuxième demi-circuit sont alimentés via des lignes d'alimentation à une deuxième source de tension Vdd2, les deux sources de tension étant distinctes, les lignes d'alimentations étant reliées après le test. Dans un autre mode de mise en oeuvre, les composants du premier demi-circuit sont par exemple reliés via des lignes de masse à un premier potentiel de référence Gnd1 et les composants du deuxième demi-circuit sont alimentés via des lignes de masse à un deuxième potentiel de référence Gnd2, les deux potentiels de référence étant dissociés, les lignes de masse étant reliées après le test.
Avantageusement, les alimentations Vdd1, Vdd2 peuvent être regroupées dès la fin de la phase d'acquisition.
Le test par analyse différentielle peut se limiter aux noeuds des registres du circuit qui permettent d'en déduire l'intégrité des noeuds des portes logiques entre ces registres.
Une méthode de câblage de l'alimentation est associée au procédé de test préalablement décrit pour la logique sécurisée. Le premier demi-circuit dispose d'une première voie d'alimentation électrique et une deuxième voie d'alimentation électrique est affectée au deuxième demi-circuit de manière à ce que chaque demi-circuit puisse être testé par une analyse différentielle de consommation (DPA) parallèlement à l'autre demi-circuit, les deux voies d'alimentation étant aptes à être mises en court-circuit.
Dans un exemple de réalisation particulier :
- la première voie d'alimentation comporte un premier anneau conducteur périphérique apte à être connecté à une première source de tension Vdd1 et relié électriquement à des lignes d'alimentation des composants du premier demi-circuit et ;
- la deuxième voie d'alimentation comporte un deuxième anneau conducteur périphérique apte à être connecté à une deuxième source de tension Vdd2 et relié électriquement à des lignes d'alimentation des composants du deuxième demi-circuit ;
les deux anneaux étant aptes à être mis en court-circuit.
Dans un autre exemple de réalisation :
- la première voie d'alimentation comporte un premier anneau conducteur périphérique apte à être connecté à un premier potentiel de masse Gnd1 et relié électriquement à des lignes de masse des composants du premier demi-circuit et ;
- la deuxième voie d'alimentation comporte un deuxième anneau conducteur périphérique apte à être connecté à un deuxième potentiel de masse Gnd2 et relié électriquement à des lignes de masse des composants du deuxième demi-circuit ;
les deux anneaux étant aptes à être mis en court-circuit.
Dans ces deux modes de réalisation, les deux anneaux sont par exemple reliés entre eux par des anti-fusibles, le court-circuit entre les deux anneaux étant réalisé par la fusion des anti-fusibles.
Les deux anneaux peuvent aussi être mis en court-circuit dans le boîtier du circuit.
L'invention a également pour objet un procédé de câblage des alimentations d'un circuit de cryptographie sécurisé comportant un premier demi-circuit associé à un deuxième demi-circuit fonctionnant en logique complémentaire, une première voie d'alimentation électrique étant affectée au premier demi-circuit et une deuxième voie d'alimentation électrique étant affectée au deuxième demi-circuit de manière à ce que chaque demi-circuit puisse être testé par une analyse différentielle de consommation (DPA) indépendamment de l'autre demi-circuit, les deux voies d'alimentation étant aptes à être mises en court-circuit.

D'autres caractéristiques et avantages de l'invention apparaîtront à l'aide de la description qui suit faite en regard de dessins annexés qui représentent :
- la figure 1, une illustration d'un chemin de donnée combinatoire d'un algorithme de cryptographie à l'intérieur d'un circuit ;
- la figure 2, une présentation des phases d'une analyse différentielle de consommation utilisée par le procédé selon l'invention ;
- la figure 3, une illustration d'une structure de circuit de cryptographie sécurisé ;
- La figure 4, un exemple de traces de consommation acquises sur les deux moitiés d'un circuit sécurisé muni de deux alimentations séparées ;
- la figure 5, un exemple de réalisation d'un circuit selon l'invention et de méthode pour court-circuiter les voies d'alimentation préalablement dissociées dans un circuit selon l'invention.

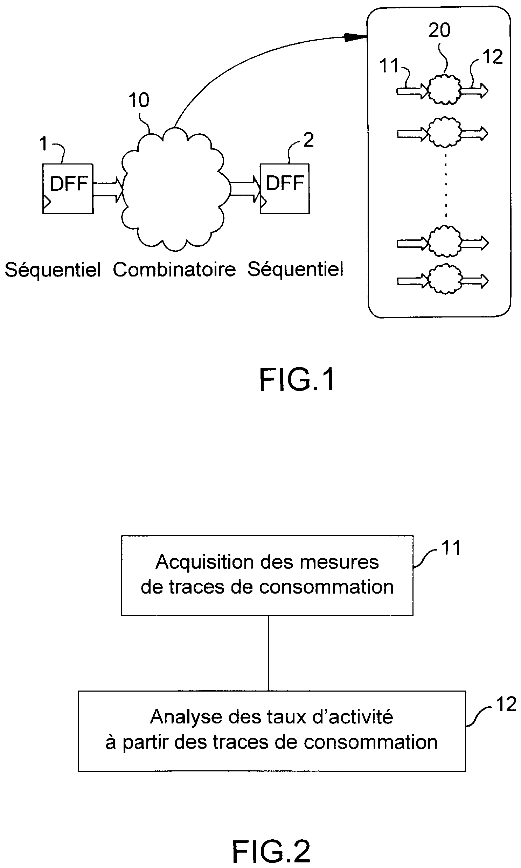

La figure 1 illustre le chemin de donnée combinatoire d'un algorithme de cryptographie à l'intérieur d'un circuit, entre deux bascules DFF 1, 2 d'un registre. Une logique combinatoire 10 relie les deux bascules DFF 1, 2. Toutes les bascules du circuit sont ainsi reliées. Le chemin se scinde en cônes de logique 20 de taille raisonnable, par exemple inférieure à 8 bits notamment comme dans le standard de cryptographie DES (Data Encryption Standard). La figure 1 illustre le cas DES où les cônes 20 ont des tranches d'entrée 11 comportant 6 bits et des tranches de sorties 12 comportant 4 bits.
Cette logique combinatoire 10, reliant les registres 1, 2, est réalisée à partir de portes logiques.
L'invention utilise l'analyse différentielle de consommation pour tester le bon fonctionnement des circuits intégrés de cryptographie, usuellement utilisée pour attaquer les circuits de cryptographie ou caractériser leur niveau de sécurité.
L'analyse différentielle de consommation, encore appelée DPA selon l'acronyme anglo-saxon « Differential Power Analysis » permet de corréler une mesure d'une quantité physique émise par un circuit, comme sa consommation électrique instantanée par exemple, à une partie de son activité. La technique DPA est usuellement utilisée pour attaquer des circuits de cryptographie, comme le décrit l'article de P.Kocher, J.Jaffe et B.Jun « Differential Power Analysis : Leaking Secrets » in Proceedings of CRYPTO'99, volume 1666 of LNCS, pages 388-397, Springer-Verlag, ou encore pour évaluer leur niveau de sécurité. Il a notamment été démontré, à la fois théoriquement et expérimentalement, que la DPA permet de prédire l'activité d'une variable booléenne dans un circuit, comme le montre notamment l'article de S.Guilley, Ph.Hoogvorst, R.Pacalet et J.Schmidt « Improving Side-Channel Attacks by Exploiting Substitution Boxes Properties » in BFCA - http://www.liafa.jussieu.fr/bfca/, pages 1-25, 2007, May 02-04, Paris. En technologie CMOS 0,13 µm, le nombre de mesures, appelées traces de consommation, nécessaires pour réaliser l'analyse DPA d'un bloc câblé tel qu'un ASIC par exemple, non protégé, réalisant l'algorithme de chiffrement DES est inférieur à mille. Ce nombre est présenté dans le tableau ci-dessous qui détaille le nombre minimum de traces à analyser pour retrouver 6 bits de clé. L'algorithme DES fait intervenir, pour chaque tour, 8 x 6 = 48 bits de clé entrant dans une boîte de substitution dite « sbox ».

| **Analyse \ Sbox #** | **S1** | **S2** | **S3** | **S4** | **S5** | **S6** | **S7** | **S8** | **Traces nécessaires = Max** |
|---|---|---|---|---|---|---|---|---|---|
| **DPA (clair aléatoire)** | 228 | 615 | 736 | 510 | 297 | 55 | 272 | 111 | 736 |
| **DPA (clair choisi)** | 5 | 31 | 56 | 16 | 17 | 22 | 4 | 4 | 56 |

Il faut noter que le même millier de traces de consommation permettent de retrouver les huit mots de 6 bits de clé. C'est pour cette raison que le tableau résume le nombre de traces nécessaires par le maximum des traces par « sbox » et non pas leur somme. Lorsque la clé est connue, l'analyse peut être accélérée en choisissant une entrée connue de l'algorithme, appelée « clair ». Une façon de procéder est décrite dans l'article de G.Perret « A note on the Plaintext Choice in Power Analysis Attacks » Technical Report from the Ecole Normale Supérieure (ENS), France, November 2005, http://www.di.ens.fr/-piret/publ/power.pdf. Des résultats expérimentaux sont indiqués dans la seconde ligne du tableau ci-dessus.

Comme indiqué précédemment, l'invention utilise la DPA pour tester les circuits de cryptographie. Ces derniers manipulent des données sensibles, par exemple des secrets tels que des clés ou des germes notamment.
Il existe deux types de circuits de cryptographie, les circuits non sécurisés et les circuits sécurisés. Ces derniers comportent des contre-mesures pour se protéger d'attaques sur leurs implémentations, ces contre-mesures étant destinées à débouter les éventuels attaquants. L'invention s'applique aux circuits non sécurisés et aux circuits sécurisés.
Le test d'un circuit de cryptographie non sécurisé est réalisé par une DPA sur tous les noeuds du circuit, plus particulièrement au niveau de chaque noeud des registres. Un circuit de cryptographie peut comporter plusieurs milliers de noeuds. Il existe essentiellement deux types de noeuds :
- les équipotentielles sorties des mémoires ou registres ;
- les équipotentielles sorties des portes logiques.
Il est possible d'effectuer une DPA uniquement sur les registres pour déduire l'état des noeuds combinatoires et donc retrouver le secret.
La contrôlabilité est assurée par la nature cryptographique de l'algorithme. En effet, lorsque le circuit est fabriqué correctement, l'essence du calcul fait que chaque noeud du circuit à un taux d'activité proche de ½. La DPA consiste à faire la différence entre les traces où il y a une activité pour le noeud (selon un prédicteur ou une fonction de sélection) et celles où il n'y a pas d'activités. Cette différence est nulle pour un noeud quelconque car il n'y a aucun lien entre le prédicteur et ce noeud, et non nulle pour le noeud testé. Un noeud est donc considéré en bon fonctionnement lorsque l'activité constatée est corrélée avec l'activité prédite. L'observabilité peut être réalisée registre par registre en utilisant une fonction de sélection idoine. Une telle fonction est notamment décrite dans l'article de S.Guilley et al précité. La couverture du test est de 100% car l'activité globale de toutes les portes se trouve additionnée dans les traces de consommation. Le nombre de vecteurs de test est de quelques centaines seulement comme le montre le tableau précédent. De plus, par rapport au test IDDQ notamment, où les mesures et le test doivent être concomitants, ce qui ralentit le processus, le test par DPA peut se découper en deux tâches. L'acquisition, partie « en ligne », qui ne nécessite que quelques centaines de mesures, peut être suivie de l'analyse, partie « hors ligne », qui peut être réalisée ultérieurement. Cette dernière étape, éventuellement gourmande en calcul, n'est donc pas sur le chemin critique.

La figure 2 illustre ainsi les deux phases d'une analyse différentielle de consommation DPA appliquée pour des tests selon l'invention.
Une première phase 11 effectue l'acquisition des mesures de traces de consommation à partir d'un jeu de vecteurs de signaux de test en entrée du circuit à tester. Les vecteurs de test utilisés peuvent être ceux utilisés pour une analyse DPA classique.
Une deuxième phase 12 analyse le taux d'activité à partir des mesures effectuées dans l'étape d'acquisition.
L'extraction bit par bit est réalisable, car dans les circuits de cryptographie les chemins de donnée, souvent larges, sont en pratique découpés en cônes de logique de taille plus restreinte. Par exemple dans le chiffrement DES, le chemin de données a une largeur de 64 bits et est découpé en tranches de 6 bits comme illustré par la figure 1.

Comme indiqué précédemment, les circuits sécurisés comportent des contre-mesures pour éviter les attaques, et notamment les attaques de type DPA décrite précédemment. En conséquence la méthode de test exposée ci-dessus n'est pas applicable, car dans ce cas la possibilité de test implique la possibilité d'attaque par DPA. Pour le test des circuits sécurisés, il n'est donc pas possible de tester des valeurs intermédiaires par une analyse directe de la consommation comme pour les circuits non sécurisés.
La protection des circuits sécurisés utilise généralement des logiques du type DPL (Dual rail with Precharge Logic). Deux types sont connus :
- la logique à consommation constante, comme WDDL (Wave Dynamic Differential Logic) et ;
- la logique à consommation constante en moyenne, comme MDLP (Masked DLP)
Dans ces deux cas, ces logiques peuvent s'implémenter avec des cellules standards, distribuées par les fabricants dans un kit de conception. Plus précisément, les portes traitant des signaux complémentaires sont séparables en deux moitiés, ou deux réseaux, de structures logiques complémentaires, formant une porte double rail de portes élémentaires, chaque porte élémentaire étant associée à une porte duale. Une première moitié qui peut être appelée « vraie » véhicule la chaîne de signaux utiles, l'autre moitié qui peut être appelée « fausse » véhicule les signaux complémentaires. Ces portes double rail, véhiculant des signaux logiques complémentaires, empêchent les analyses de consommation effectuées par DPA. En effet l'activité électrique, en terme de consommation, est constante et indépendante des données logiques puisque lorsqu'une porte passe à un état logique, la porte duale reste dans le même état et vice versa. Toute tentative de corrélation par analyse DPA est alors vouée à l'échec.

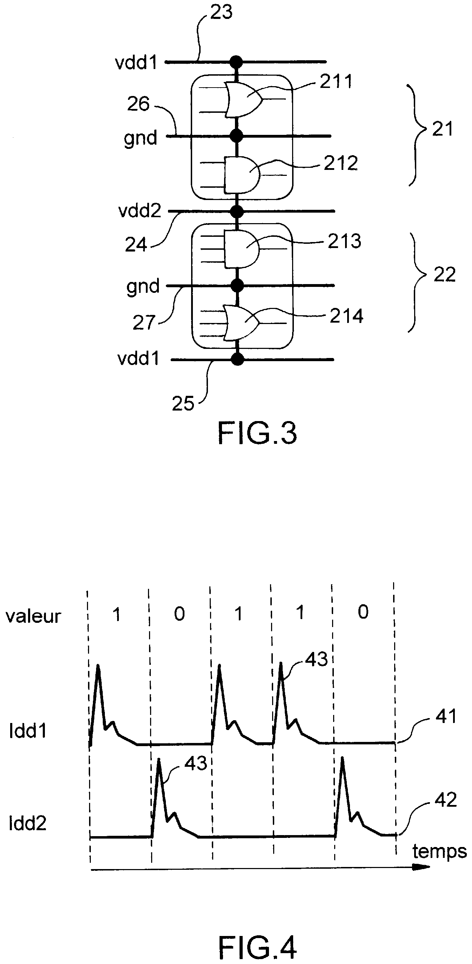

La figure 3 illustre une telle structure de circuits de cryptographie sécurisés. Cette figure présente à titre d'exemple deux portes double rail 21, 22 séparables en deux moitiés véhiculant des signaux complémentaires. La première porte double rail 21 est une porte « ou » (211, 212). La porte élémentaire « ou » 211 de la première moitié, reçoit les signaux non complémentés, alors que la porte duale « et » 212 de la seconde moitié reçoit les signaux complémentés. Pour chaque porte logique élémentaire, lorsqu'un noeud commute, le noeud correspondant de sa porte duale 212 ne commute pas, les deux moitiés se masquant ainsi mutuellement.
Parallèlement à cette première porte double rail 21, est représenté une deuxième porte double rail 22 « et » (213, 214), fonctionnant de même en complémentarité.
Les tensions électriques sont fournies à ces portes logiques 211, 212, 213, 214 par des lignes d'alimentation 23, 24, 25. Les portes sont par ailleurs reliées à des lignes de masse 26, 27 véhiculant le potentiel nul de référence pour les alimentations. Les lignes de masse 26, 27 sont reliées entre elles à un potentiel de référence, qui peut être le potentiel de masse. Les lignes d'alimentation 23, 24, 25, ayant par exemple un niveau de tension de 1,2 volts en technologie 130nm, sont reliées entre elles à une alimentation électrique.

Le masquage mutuel du fonctionnement des deux moitiés d'un double rail empêche une analyse de type DPA et donc aussi un test de fonctionnement tel que décrit précédemment.

Dans un circuit selon l'invention, les lignes d'alimentation d'un double rail 21, 22 sont dissociées lors de la fabrication. C'est-à-dire que la ligne d'alimentation 23 alimentant la première moitié d'un double rail 21, représentée par la porte « ou » 211 est dissociée physiquement de la ligne d'alimentation 24 alimentant la deuxième moitié, représentée par la porte « et » 212. Ainsi, la première ligne d'alimentation 23 est reliée à une première source de tension Vdd1 et la deuxième ligne d'alimentation Vdd2 est reliée à une deuxième source de tension Vdd2 distincte de la précédente. Il en est de même pour les lignes d'alimentation 24, 25 des autres portes double rail 22.
Pour rendre le circuit de cryptographie testable par DPA, l'invention propose donc d'alimenter les deux moitiés 211, 212 par des sources de tensions d'alimentation différentes Vdd1, Vdd2, chacune délivrant par ailleurs un niveau de tension nécessaire au fonctionnement de portes. Ainsi, en mode de test, les deux alimentations Vdd1 et Vdd2 sont dissociées, ce qui permet de réaliser une DPA sur les deux moitiés en parallèle. Les deux moitiés reçoivent des signaux qui peuvent s'entrecroiser du fait que les inversions sont réalisées par des croisements de fils entre la moitié recevant les entrées complémentées et celle recevant les entrées non complémentées.

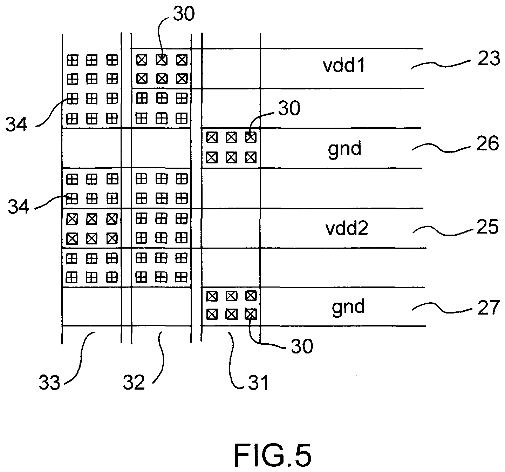

La figure 5 illustre par deux courbes 41, 42 les chronogrammes des courants Idd1 et Idd2 issus respectivement des tensions d'alimentation Vdd1 et Vdd2 pour différentes valeurs d'un signal double rail correspondant aux deux noeuds de sortie des deux moitiés. Lorsque la valeur logique passe à 1, une pointe de courant 43 est consommée.
Les 2 noeuds composant le signal double rail sont ainsi testables séparément par l'acquisition simultanée des deux traces de consommation. Lorsque les 2 tensions d'alimentation sont reliées entre elles, le courant devient la somme Idd1 +Idd2 qui a toujours la même forme, quelle que soit la valeur du noeud.

Dans un circuit intégré tel qu'illustré partiellement par la figure 3, les portes logiques 211, 212, 213, 214 et leurs noeuds de connexions associés, les lignes d'alimentation et les lignes de masse forment des rails, chaque porte d'un rail étant connectée entre une ligne d'alimentation et une ligne de masse. Le dualisme des portes, notamment pour se prémunir contre les attaques par DPA, crée un second rail adjoint au rail principal, formant un double rail 21 tel que décrit précédemment et illustré par la figure 3. Un rail constitue la moitié « vrai » et l'autre rail constitue la moitié « fausse ».
Les doubles rails sont par exemple disposés en parallèle. La figure 3 montre ainsi un deuxième double rail 22 parallèle au précédent 21. Dans ce cas, pour dissocier les connexions aux sources de tension Vdd1 et Vdd2 comme décrit précédemment, une ligne d'alimentation 23, 25 sur deux est par exemple reliée à la première source Vdd1 et les autres lignes, intercalées, sont par exemple connectées à la deuxième source de tension Vdd2.
Un demi-circuit tel qu'évoqué précédemment est composé de l'ensemble des rails « vrai » et l'autre demi-circuit est composé de l'ensemble des rails « faux », alimentés respectivement par Vdd1 et Vdd2. Ces demi-circuits peuvent être enchevêtrés comme illustré dans l'exemple de réalisation de la figure 3, mais ils peuvent aussi ne pas l'être.
Il est à noter qu'il est également envisageable de séparer les lignes de masse 26, 27. Dans ce cas, une ligne de masse sur deux serait reliée à un premier potentiel de référence Gnd1 et les autres lignes de masse, intercalées, seraient reliées à un second potentiel de référence Gnd2.

La figure 5 illustre un exemple de réalisation d'un circuit sécurisé selon l'invention. Elle présente par ailleurs une méthode possible pour court-circuiter les alimentations Vdd1 et Vdd2 après la phase de tests. A cet effet, la figure présente uniquement les lignes d'alimentation ou de masse, l'ensemble étant réalisé dans un circuit intégré, par exemple en silicium. Après les tests il est nécessaire de court-circuiter les alimentations Vdd1 et Vdd2 pour sécuriser le circuit de cryptographie, et notamment pour le rendre invulnérable aux analyses malveillantes par DPA. Les portes du premier demi-circuit et les portes duales du deuxième demi-circuit sont alors alimentées par une même source de tension, conformément au fonctionnement d'un circuit sécurisé.

La figure 5 illustre le cas où ce sont les alimentations Vdd1 et Vdd2 qui sont dissociées, les lignes de masse 26, 27 étant toutes reliées à un même potentiel de masse ou de référence. La figure montre les lignes d'alimentation 23, 25 et de masse 26, 27 réalisées par des pistes. Les lignes de masse 26, 27 sont par exemple reliées à un premier anneau équipotentiel 31. Ce premier anneau, disposé par exemple en périphérie du circuit, est lui-même relié à un potentiel de masse ou de référence. Les connexions des lignes de masse à cet anneau 31 sont illustrées par des points de contact 30. Les lignes d'alimentations 23, 25 sont reliées à un double anneau 32, 33, situé lui-aussi par exemple en périphérie du circuit. Un premier anneau 32 relié électriquement aux lignes d'alimentation 23 du premier demi-circuit forme une première voie d'alimentation apte à être connectée à une première source d'alimentation. Un deuxième anneau 33 relié électriquement aux lignes d'alimentation 25 du deuxième demi-circuit forme une deuxième voie d'alimentation apte à être connectée à une deuxième source d'alimentation.
Le premier anneau 32 est ainsi par exemple connecté à la source de tension Vdd1 et le deuxième anneau 33 est connecté à la source de tension Vdd2, la connexion étant assurée par des points de contact 30. Une ligne d'alimentation 23 est reliée via le premier anneau 32 à l'alimentation Vdd1 et la ligne d'alimentation suivante 25 est reliée via le deuxième anneau à l'alimentation Vdd2. D'une manière générale, les lignes d'alimentation paires sont par exemple reliées à Vdd1 via le premier anneau 32 et les lignes d'alimentation impaires sont par exemple reliées à Vdd2 via le deuxième anneau 33.
Les deux anneaux 32, 33 du double anneau d'alimentation sont reliés entre eux par des anti-fusibles 34. Ces derniers sont commandés pour mettre les deux anneaux 32, 33 en court-circuit après la phase de test et ainsi relier les voies d'alimentation des deux demi-circuits. Le court-circuit entre les deux voies d'alimentation peut donc être réalisé dans le silicium par des anti-fusibles comme illustré par la figure 5 ou dans le boîtier du circuit intégré par un routage adapté. Il existe de nombreuses solutions connues pour sceller un circuit dans un état déterminé.
Les lignes d'alimentations, y compris les anneaux 31, 32, 33 sont par exemple routées dans les couches hautes du circuit. Les anti-fusibles doivent être de taille suffisamment grande pour conduire l'intégralité du courant nécessaire au bon fonctionnement du circuit. La figure 5 présente une répartition de petits anti-fusibles 34, il est aussi possible de prévoir un seul anti-fusible pourvu qu'il puisse passer la même quantité de courant. Certaines technologies permettent d'obtenir des contacts d'environ 500 ohms pour un anti-fusible 34 après qu'il a été brûlé. Il existe d'autres technologies où le contact après brûlure peut être de l'ordre de 80 ohms. A titre de comparaison, la résistance des points de contact passant 30 est de l'ordre de 1 ohm. Ainsi, une bonne connexion entre les anneaux 32, 33 d'alimentation nécessite beaucoup plus d'anti-fusibles 34 que de points de contacts 30. Les connexions peuvent être réalisées par-dessous comme illustré par la figure 4 ou par-dessus, voire sur les deux faces en même temps.
Un circuit de cryptographie sécurisé, selon l'invention, comporte par exemple un anneau d'alimentation supplémentaire. L'accroissement en largeur correspond alors à l'ajout de cet anneau, soit environ 10 µm, autour d'un bloc de cryptographie large d'environ 1 mm. L'accroissement à prévoir est donc seulement de l'ordre de 1%.
L'intégration de la désolidarisation des alimentations des lignes paires, à Vdd1, et impaires, à Vdd2, dans un flot de conception des circuits existant est triviale. En effet, au lieu de générer deux anneaux, trois sont produits. Cette opération est typiquement réalisée dans des outils professionnels de CAO en une seule ligne de code.
Dans un autre mode de réalisation, les lignes de masse 26, 27 peuvent aussi être dissociées. Ainsi une première voie d'alimentation comporte alors un premier anneau conducteur périphérique apte à être connecté à un premier potentiel de masse Gnd1, relié électriquement aux lignes de masse 26 des composants 211, 214 du premier demi-circuit, et une deuxième voie d'alimentation comporte un deuxième anneau conducteur périphérique apte à être connecté à un deuxième potentiel de masse Gnd2, relié électriquement aux lignes de masse 27 des composants 212, 213 du deuxième demi-circuit. Comme dans le cas précédent, les deux anneaux étant aptes à être mis en court-circuit.

La mise en oeuvre du procédé de test selon l'invention est aisée. Les mesures de trace de consommation sur les circuits en sortie de fabrication pour l'analyse DPA nécessitent simplement un appareillage standard, par exemple :
- un ordinateur pour piloter le circuit sous test, équipé avec ;
- une carte d'acquisition à grande bande passante, typiquement quelques gigahertz.

L'invention peut avantageusement être utilisée par les fabricants de circuits de cryptographie sécurisés, notamment les fabricants :
- de cartes à puces en particulier pour les applications TPM, SIM, passeport électroniques, étiquettes, RFID, jetons d'authentification ;
- des systèmes-sur-puce pour les applications de télécommunication.

## Revendications

1. Procédé de test d'un circuit de cryptographie intégrant un secret et comportant des registres (1, 2) et des portes logiques (10, 211, 212, 213, 214) interconnectés par un ensemble de noeuds, **caractérisé en ce que** ledit procédé effectue une analyse différentielle de consommation (DPA) comportant :
- une phase d'acquisition de mesures de traces de consommation (11) au niveau de tous les noeuds fonction de vecteurs de signaux de test en entrée du circuit ;
- une phase d'analyse du taux d'activité de chaque noeud (12) à partir des mesures de traces de consommation, un noeud étant considéré en bon fonctionnement lorsque son activité est conforme à un modèle de prédiction d'activité.

2. Procédé selon la revendication 1, **caractérisé en ce que** le secret du circuit de cryptographie étant personnalisable, l'analyse différentielle de consommation (11, 12) est réalisée avec un secret connu, puis une personnalisation du secret est effectuée après le test.

3. Procédé selon la revendication 1, **caractérisé en ce que** le circuit de cryptographie étant sécurisé, comportant un premier demi-circuit (211, 214) associé à un deuxième demi-circuit (212, 213) fonctionnant en logique complémentaire, l'alimentation électrique (Vdd1, 23, 25) du premier demi-circuit est dissociée de l'alimentation électrique (Vdd2, 24) du deuxième demi-circuit, l'analyse différentielle de consommation étant réalisée parallèlement sur chaque demi-circuit, les deux alimentations étant regroupées en une même alimentation électrique après le test.

4. Procédé selon la revendication 2, **caractérisé en ce que** les composants (211, 214) du premier demi-circuit sont reliés via des lignes d'alimentation (23, 25) à une première source de tension (Vdd1) et les composants (212, 213) du deuxième demi-circuit sont alimentés via des lignes d'alimentation (24) à une deuxième source de tension (Vdd2), les deux sources de tension étant distinctes, les lignes d'alimentations (23, 24, 25) étant reliées après le test.

5. Procédé selon l'une quelconque des revendications 1 à 4, **caractérisé en ce que** les composants (211, 214) du premier demi-circuit sont reliés via des lignes de masse (26) à un premier potentiel de référence (Gnd1) et les composants (212, 213) du deuxième demi-circuit sont alimentés via des lignes de masse (27) à un deuxième potentiel de référence (Gnd2), les deux potentiels de référence étant dissociés, les lignes de masse (26, 27) étant reliées après le test.

6. Procédé selon l'une quelconque des revendications 1 à 5, **caractérisé en ce que** les alimentations (Vdd1, Vdd2) sont regroupées après la phase d'acquisition.

7. Procédé selon l'une quelconque des revendications précédentes, **caractérisé en ce que** l'acquisition des mesures de traces de consommation est effectuée uniquement sur les registres (1, 2).

8. Circuit de cryptographie sécurisé comportant un premier demi-circuit (211, 214) associé à un deuxième demi-circuit (212, 213) fonctionnant en logique complémentaire, **caractérisé en ce qu'**il comporte une première voie d'alimentation électrique (23, 25, Vdd1) affectée au premier demi-circuit et une deuxième voie d'alimentation électrique (24, Vdd2) affectée au deuxième demi-circuit de manière à ce que chaque demi-circuit puisse être testé par une analyse différentielle de consommation (DPA) indépendamment de l'autre demi-circuit, les deux voies d'alimentation étant aptes à être mises en court-circuit.

9. Circuit selon la revendication 8, **caractérisé en ce que** :
- la première voie d'alimentation comporte un premier anneau conducteur périphérique (32) apte à être connecté à une première source de tension (Vdd1) et relié électriquement à des lignes d'alimentation (23, 25) des composants (211, 214) du premier demi-circuit et ;
- la deuxième voie d'alimentation comporte un deuxième anneau conducteur périphérique (33) apte à être connecté à une deuxième source de tension (Vdd2) et relié électriquement à des lignes d'alimentation (24) des composants (212, 213) du deuxième demi-circuit ;
les deux anneaux étant aptes à être mis en court-circuit.

10. Circuit selon l'une quelconque des revendications 8 ou 9, **caractérisé en ce que** :
- la première voie d'alimentation comporte un premier anneau conducteur périphérique apte à être connecté à un premier potentiel de masse (Gnd1) et relié électriquement à des lignes de masse (26) des composants (211, 214) du premier demi-circuit et ;
- la deuxième voie d'alimentation comporte un deuxième anneau conducteur périphérique apte à être connecté à un deuxième potentiel de masse (Gnd2) et relié électriquement à des lignes de masse (27) des composants (212, 213) du deuxième demi-circuit ;
les deux anneaux étant aptes à être mis en court-circuit.

11. Circuit selon l'une quelconque des revendications 8, 9 ou 10 **caractérisé en ce que** la connexion des voies d'alimentation entre elles est assurée par une technologie dite antifusible permettant le passage de l'état isolant à l'état conducteur d'une façon irréversible après fusion.

12. Circuit selon l'une quelconque des revendications 9, 10 ou 11 **caractérisé en ce que** les anneaux (26, 27, 32, 33) sont reliés entre eux par des anti-fusibles, le court-circuit entre les deux anneaux étant réalisé par la fusion des anti-fusibles (34).

13. Procédé de câblage des alimentations d'un circuit de cryptographie sécurisé comportant un premier demi-circuit (211, 214) associé à un deuxième demi-circuit (212, 213) fonctionnant en logique complémentaire, **caractérisé en ce qu'**une première voie d'alimentation électrique (23, 25, Vdd1) est affectée au premier demi-circuit et une deuxième voie d'alimentation électrique (24, Vdd2) est affectée au deuxième demi-circuit de manière à ce que chaque demi-circuit puisse être testé par une analyse différentielle de consommation (DPA) indépendamment de l'autre demi-circuit, les deux voies d'alimentation étant aptes à être mises en court-circuit

## Patentansprüche

1. Verfahren zum Prüfen einer kryptografischen Schaltung, die ein Geheimnis enthält und die Register (1, 2) und Logikports (10, 211, 212, 213, 214) umfasst, die durch einen Satz Knoten untereinander verbunden sind, **dadurch gekennzeichnet, dass** das Verfahren eine differentielle Verbrauchsanalyse (DPA) durchführt, die Folgendes beinhaltet:
- eine Phase des Erfassens von Verbrauchsspurmesswerten (11) an allen Knoten in Abhängigkeit von Prüfsignalvektoren am Eingang der Schaltung;
- eine Phase des Analysierens der Aktivitätsrate jedes Knotens (12) auf der Basis der Verbrauchsspurmesswerte, wobei ein Knoten dann als funktionsfähig angesehen wird, wenn seine Aktivität einem Aktivitätsvorhersagemodell entspricht.

2. Verfahren nach Anspruch 1, **dadurch gekennzeichnet, dass**, da das Geheimnis der kryptografischen Schaltung personalisiert werden kann, die differentielle Verbrauchsanalyse (11, 12) mit einem bekannten Geheimnis realisiert und dann nach der Prüfung eine Personalisierung des Geheimnisses durchgeführt wird.

3. Verfahren nach Anspruch 1, **dadurch gekennzeichnet, dass**, da die kryptografische Schaltung gesichert ist, umfassend eine erste Halbschaltung (211, 214), die mit einer zweiten Halbschaltung (212, 213) assoziiert ist, die mit komplementärer Logik arbeitet, die Stromversorgung (Vdd1, 23, 25) der ersten Halbschaltung von der Stromversorgung (Vdd2, 24) der zweiten Halbschaltung getrennt ist, wobei die differentielle Verbrauchsanalyse parallel auf jeder Halbschaltung erfolgt, wobei die beiden Versorgungen nach der Prüfung zu einer selben Stromversorgung vereinigt werden.

4. Verfahren nach Anspruch 2, **dadurch gekennzeichnet, dass** die Komponenten (211, 214) der ersten Halbschaltung über Versorgungsleitungen (23, 25) mit einer ersten Spannungsquelle (Vdd1) verbunden werden und die Komponenten (212, 213) der zweiten Halbschaltung über Versorgungsleitungen (24) mit einer zweiten Spannungsquelle versorgt werden, wobei die beiden Spannungsquellen separat sind, wobei die Versorgungsleitungen (23, 24, 25) nach der Prüfung verbunden werden.

5. Verfahren nach einem der Ansprüche 1 bis 4, **dadurch gekennzeichnet, dass** die Komponenten (211, 214) der ersten Halbschaltung über Masseleitungen (26) mit einem ersten Referenzpotential (Gnd1) verbunden werden und die Komponenten (212, 213) der zweiten Halbschaltung über Masseleitungen (27) mit einem zweiten Referenzpotential (Gnd2) versorgt werden, wobei die beiden Referenzpotentiale getrennt sind, wobei die Masseleitungen (26, 27) nach der Prüfung verbunden werden.

6. Verfahren nach einem der Ansprüche 1 bis 5, **dadurch gekennzeichnet, dass** die Versorgungen (Vdd1, Vdd2) nach der Erfassungsphase vereinigt werden.

7. Verfahren nach einem der vorherigen Ansprüche, **dadurch gekennzeichnet, dass** die Erfassung von Verbrauchsspurmesswerten nur auf den Registern (1, 2) erfolgt.

8. Gesicherte kryptografische Schaltung, die eine erste Halbschaltung (211, 214) umfasst, die mit einer zweiten Halbschaltung (212, 213) assoziiert ist, die mit komplementärer Logik arbeitet, **dadurch gekennzeichnet, dass** sie einen auf der ersten Halbschaltung eingesetzten ersten Stromversorgungskanal (23, 25, Vdd1) und einen auf der zweiten Halbschaltung eingesetzten zweiten Stromversorgungskanal (24, Vdd2) umfasst, so dass jede Halbschaltung durch eine differentielle Verbrauchsanalyse (DPA) unabhängig von der anderen Halbschaltung geprüft werden kann, wobei die beiden Versorgungskanäle kurzgeschlossen werden können.

9. Schaltung nach Anspruch 8, **dadurch gekennzeichnet, dass**:
- der erste Versorgungskanal einen ersten peripheren leitfähigen Ring (32) umfasst, der mit einer ersten Spannungsquelle (Vdd1) verbunden werden kann und elektrisch mit Versorgungsleitungen (23, 25) der Komponenten (211, 214) der ersten Halbschaltung verbunden ist; und
- der zweite Versorgungskanal einen zweiten peripheren leitfähigen Ring (33) umfasst, der mit einer zweiten Spannungsquelle (Vdd2) verbunden werden kann und elektrisch mit Versorgungsleitungen (24) von Komponenten (212, 213) der zweiten Halbschaltung verbunden ist;
wobei die zwei Ringe kurzgeschlossen werden können.

10. Schaltung nach Anspruch 8 oder 9, **dadurch gekennzeichnet, dass**:
- der erste Versorgungskanal einen ersten peripheren leitfähigen Ring umfasst, der mit einem ersten Massepotential (Gnd1) verbunden werden kann und elektrisch mit Masseleitungen (26) der Komponenten (211, 214) der ersten Halbschaltung verbunden ist; und
- der zweite Versorgungskanal einen zweiten peripheren Leiterring umfasst, der mit einem zweiten Massepotential (Gnd2) verbunden werden kann und elektrisch mit Masseleitungen (27) von Komponenten (212, 213) der zweiten Halbschaltung verbunden ist;
wobei die beiden Ringe kurzgeschlossen werden können.

11. Schaltung nach Anspruch 8, 9 oder 10, **dadurch gekennzeichnet, dass** die Verbindung der Versorgungskanäle untereinander durch eine sogenannte Antifuse-Technologie gewährleistet wird, die den Übergang vom Isolierzustand in den Leitzustand auf irreversible Weise nach dem Schmelzen zulässt.

12. Schaltung nach Anspruch 9, 10 oder 11, **dadurch gekennzeichnet, dass** die Ringe (26, 27, 32, 33) untereinander durch Antifuse-Technologie verbunden sind, wobei der Kurzschluss zwischen den beiden Ringen durch Schmelzen von Antifuses (34) realisiert wird.

13. Verfahren zum Verdrahten der Versorgungen einer gesicherten kryptografischen Schaltung, die eine erste Halbschaltung (211, 214) umfasst, die mit einer zweiten Halbschaltung (212, 213) assoziiert ist, die mit komplementärer Logik arbeitet, **dadurch gekennzeichnet, dass** ein erster Stromversorgungskanal (23, 25, Vdd1) auf der ersten Halbschaltung eingesetzt wird, und ein zweiter Stromversorgungskanal (24, Vdd2) auf der zweiten Halbschaltung eingesetzt wird, so dass jede Halbschaltung durch eine differentielle Verbrauchsanalyse (DPA) unabhängig von der anderen Halbschaltung geprüft werden kann, wobei die beiden Versorgungskanäle kurzgeschlossen werden können.

## Claims

1. A method for testing a cryptography circuit incorporating a secret and comprising registers (1, 2) and logic gates (10, 211, 212, 213, 214) interconnected by a set of nodes, **characterized in that** said method performs a differential power analysis (DPA) comprising:
- a phase of acquiring measurements of power-consumption traces (11) at all the nodes as a function of test signal vectors at the input of the circuit;
- a phase of analyzing the rate of activity of each node (12) based on the measurements of the power-consumption traces, a node being considered to be operating correctly when its activity complies with an activity prediction template.

2. The method as claimed in claim 1, **characterized in that**, since the secret of the cryptography circuit can be customized, the differential power analysis (11, 12) is carried out with a known secret, then the secret is customized after the test.

3. The method as claimed in claim 1, **characterized in that**, since the cryptography circuit is secure, comprising a first half-circuit (211, 214) associated with a second half-circuit (212, 213) operating in complementary logic, the electric power supply (Vdd1, 23, 25) of the first half-circuit is separated from the electric power supply (Vdd2, 24) of the second half-circuit, the differential power analysis being carried out in parallel on each half-circuit, the two power supplies being combined into one and the same electric power supply after the test.

4. The method as claimed in claim 2, **characterized in that** the components (211, 214) of the first half-circuit are connected via power supply lines (23, 25) to a first voltage source (Vdd1) and the components (212, 213) of the second half-circuit are powered via power supply lines (24) to a second voltage source (Vdd2), the two voltage sources being distinct, the power supply lines (23, 24, 25) being connected after the test.

5. The method as claimed in any of claims 1 to 4, **characterized in that** the components (211, 214) of the first half-circuit are connected via ground lines (26) to a first reference potential (Gnd1) and the components (212, 213) of the second half-circuit are powered via ground lines (27) to a second reference potential (Gnd2), the two reference potentials being separated, the ground lines (26, 27) being connected after the test.

6. The method as claimed in any of claims 1 to 5, **characterized in that** the power supplies (Vdd1, Vdd2) are combined after the acquisition phase.

7. The method as claimed in any one of the preceding claims, **characterized in that** the acquisition of the measurements of power-consumption traces is carried out only on the registers (1, 2).

8. A secure cryptography circuit comprising a first half-circuit (212, 214) associated with a second half-circuit (212, 213) operating in complementary logic, **characterized in that** it comprises a first electric power supply path (23, 25, Vdd1) assigned to the first half-circuit and a second electric power supply path (24, Vdd2) assigned to the second half-circuit so that each half-circuit can be tested by a differential power analysis (DPA) independently of the other half-circuit, the two power supply paths being capable of being short-circuited.

9. The circuit as claimed in claim 8, **characterized in that**:
- the first power supply path comprises a first peripheral conducting ring (32) capable of being connected to a first voltage source (Vdd1) and electrically connected to power supply lines (23, 25) of the components (211, 214) of the first half-circuit; and
- the second power supply path comprises a second peripheral conducting ring (33) capable of being connected to a second voltage source (Vdd2) and electrically connected to power supply lines (24) of the components (212, 213) of the second half-circuit;
the two rings being capable of being short-circuited.

10. The circuit as claimed in any one of claims 8 or 9, **characterized in that**:
- the first power supply path comprises a first peripheral conducting ring capable of being connected to a first ground potential (Gnd1) and electrically connected to ground lines (26) of the components (211, 214) of the first half-circuit; and
- the second power supply path comprises a second peripheral conducting ring capable of being connected to a second ground potential (Gnd2) and electrically connected to ground lines (27) of the components (212, 213) of the second half-circuit;
the two rings being capable of being short-circuited.

11. The circuit as claimed in any one of claims 8, 9 or 10, **characterized in that** the power supply paths are connected together by a technology called antifuse technology allowing the transition from the isolating state to the conducting state in an irreversible manner after melting.

12. The circuit as claimed in any one of claims 9, 10 or 11, **characterized in that** the rings (26, 27, 32, 33) are connected together by antifuses, the short circuit between the two rings being produced by the melting of the antifuses (34).

13. A method of wiring the power supplies of a secure cryptography circuit comprising a first half-circuit (211, 214) associated with a second half-circuit (212, 213) operating in complementary logic, **characterized in that** a first electric power supply path (23, 25, Vdd1) is assigned to the first half-circuit and a second electric power supply path (24, Vdd2) is assigned to the second half-circuit so that each half-circuit can be tested by a differential power analysis (DPA) independently of the other half-circuit, the two power supply paths being capable of being short-circuited.
